(19) Europäisches Patentamt / European Patent Office / Office européen des brevets

(11) **EP 3 477 513 B1**

(12) **EUROPEAN PATENT SPECIFICATION**

(45) Date of publication and mention
of the grant of the patent:
**19.07.2023  Bulletin 2023/29**

(21) Application number: **18201164.3**

(22) Date of filing: **18.10.2018**

(51) International Patent Classification (IPC):
**G06F 30/18** *(2020.01)*

(52) Cooperative Patent Classification (CPC):
**G06F 30/18;** B60R 16/0207; B60R 16/0215;
G06F 30/15; G06F 2113/16; H01B 13/012

(54) **DESIGNING SUPPORT METHOD AND DESIGNING SUPPORT SYSTEM**

ENTWURFSUNTERSTÜTZUNGSVERFAHREN UND ENTWURFSUNTERSTÜTZUNGSSYSTEME

PROCÉDÉ ET SYSTÈME DE SUPPORT DE CONCEPTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.10.2017  JP 2017205164
24.10.2017  JP 2017205165
21.11.2017  JP 2017223233**

(43) Date of publication of application:
**01.05.2019  Bulletin 2019/18**

(73) Proprietor: **Proterial, Ltd.
Tokyo 135-0061 (JP)**

(72) Inventors:
• **AOKI, Katsuju
Tokyo, 108-8224 (JP)**
• **KAWASE, Kenji
Tokyo, 108-8224 (JP)**
• **YAMAMOTO, Raifu
Tokyo, 108-8224 (JP)**
• **NAMEKAWA, Masahiko
Tokyo, 108-8224 (JP)**

(74) Representative: **Seemann & Partner
Patentanwälte mbB
Raboisen 6
20095 Hamburg (DE)**

(56) References cited:
**WO-A1-2017/149651**

**Description**

BACKGROUND

The present disclosure relates to a designing support method and a designing support system.

A wire harness in which electrical wires for transmitting power, electric signals, and the like are bundled is wired in a moving body such as a vehicle, an airplane, and the like. The work of designing and manufacturing the conventional wire harness, and wiring the manufactured wire harness at a desired position on the moving body is a complicated work that requires skill and time.

For example, in reviewing a path for wiring the wire harness carried out in designing, a review based on a value obtained by measuring an actual object (vehicle body or machine body in which the wire harness is wired) of the moving body is carried out. Acquiring an accurate value in the measurement of the actual object is a complicated work that requires skill. Furthermore, if an unskilled person carries out the measurement, it may require a long time to acquire a correct value.

In addition, in the work for wiring the wire harness in the moving body, a technique that facilitates the attachment of the wire harness to the moving body has been proposed (see e.g., Japanese Unexamined Patent Application Publication No. 2010-137649). Prior art is also disclosed in WO 2017/149651 A1.

SUMMARY

As described above, in the method for reviewing based on the value obtained by measuring the actual object of the moving body, the designing of the wiring path cannot be carried out until the actual object of the moving body is completed. Thus, a problem arises in that the designing of the wire harness becomes difficult.

The present invention thus relates to a wire harness design method according to claim 1 and to a corresponding system according to claim 5. In one aspect of the present disclosure, it is preferable to provide a designing support method and a designing support system capable of facilitating the design of a wire harness.

A designing support method according to a first aspect of the present disclosure comprises a routing step of creating, based on three-dimensional (3D) design data of a moving body, wiring path information, which is path information of a plurality of electrical wires arranged with respect to the 3D design data; and a harness defining step of bundling a predetermined number of electrical wires selected according to a predetermined rule from the wiring path information to define the wire harness.

A designing support system according to a second aspect of the present disclosure comprises a routing section for creating, based on three-dimensional (3D) design data of a moving body, wiring path information, which is path information of a plurality of electrical wires arranged with respect to the 3D design data; and a defining section for bundling a predetermined number of electrical wires selected according to a predetermined rule from the wiring path information to define a wire harness.

According to the designing support method of the first aspect and the designing support system of the second aspect of the present disclosure, the wire harness can be defined after setting a path in which the electrical wire is arranged based on the 3D design data. Thus, the designing of the wire harness is facilitated compared to when setting the path in which the electrical wire is arranged based on the value obtained by measuring the actual object of the moving body.

Effect of the Invention

The designing support method and the designing support system of the present disclosure have an effect of facilitating the designing of the wire harness by defining the wire harness after setting a path in which the electrical wire is arranged based on the 3D design data.

BRIEF DESCRIPTION OF THE DRAWINGS

An embodiment of the present disclosure will be described hereinafter by way of example with reference to the accompanying drawings, in which:

Fig. 1 is a block diagram describing a configuration of a designing support system according to one embodiment of the present disclosure;
Fig. 2 is a schematic view describing a configuration of a wire harness;
Fig. 3 is a view describing a model of a vehicle generated based on three-dimensional CAD data;
Fig. 4 is a view describing a virtual space generated based on virtual space information;

Fig. 5 is a schematic view describing a configuration of a manufacturing support device;
Fig. 6 is a flowchart describing a designing support method of the wire harness by the designing support system;
Fig. 7 is a flowchart of a sub-routine describing a method of creating a virtual space;
Fig. 8 is a flowchart of a sub-routine describing a method of an electrical wire routing work;
Fig. 9 is one mode displayed on a harness digital board, and is a schematic view describing a display mode of an extra length in an electrical wire;
Fig. 10A is a schematic view describing an arranging state of the electrical wire by the wiring process of the present embodiment;
Fig. 10B is a schematic view describing an arranging state of the electrical wire by the conventional wiring process;
Fig. 11 is a schematic view describing a shape of an electrical wire at a passing point by the wiring process of the present embodiment;
Fig. 12 is a flowchart of a sub-routine describing a method of creating a harness design drawing; and
Fig. 13 is a flowchart of a sub-routine describing a method of creating a harness board figure.

## DETAILED DESCRIPTION OF THE PREFERRED EMBODIMENTS

A designing support system 1 of the present embodiment is a system that supports designing, manufacturing, and wiring of a wire harness 500 wired in a vehicle body of a railroad vehicle (which corresponds to one example of moving body).

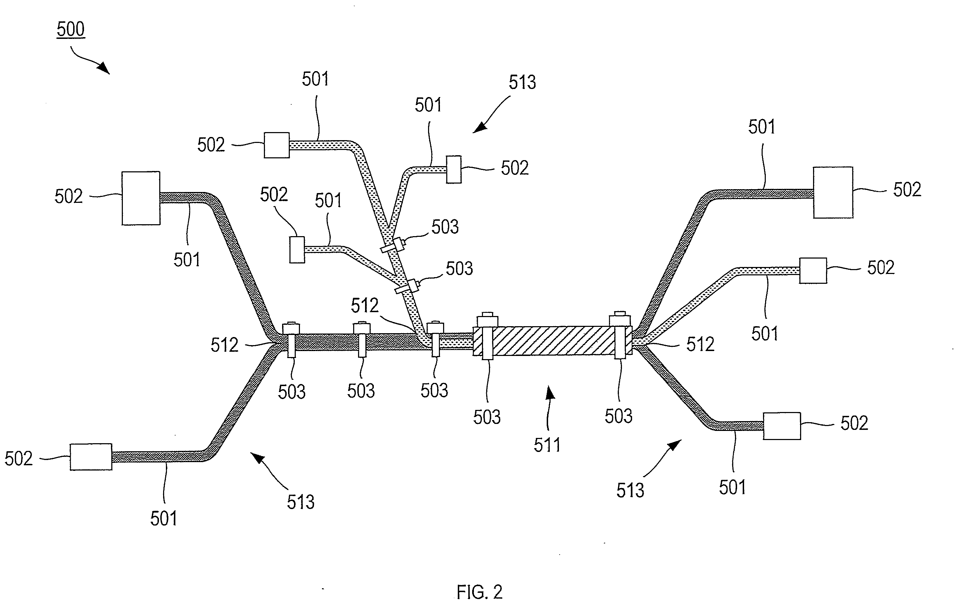

As shown in Fig. 2, the wire harness 500 has a configuration in which a plurality of electrical wires 501 connecting the devices mounted on the vehicle body of the railroad vehicle are bundled. The electrical wire 501 has a function of transmitting power, electric signals, and the like between the connected devices. A connector 502 having a shape corresponding to a device to be connected is attached to an end of the electrical wire 501.

The wire harness 500 comprises a binding member 503 for bundling and binding the plurality of electrical wires 501. A portion where the plurality of electrical wires 501 are bundled in the wire harness 500 is also represented as a main line 511, a position where the electrical wires 501 are branched from the main line is represented as a branched point 512, and a portion farther from the portion branched from the main line is represented as a branch line 513.

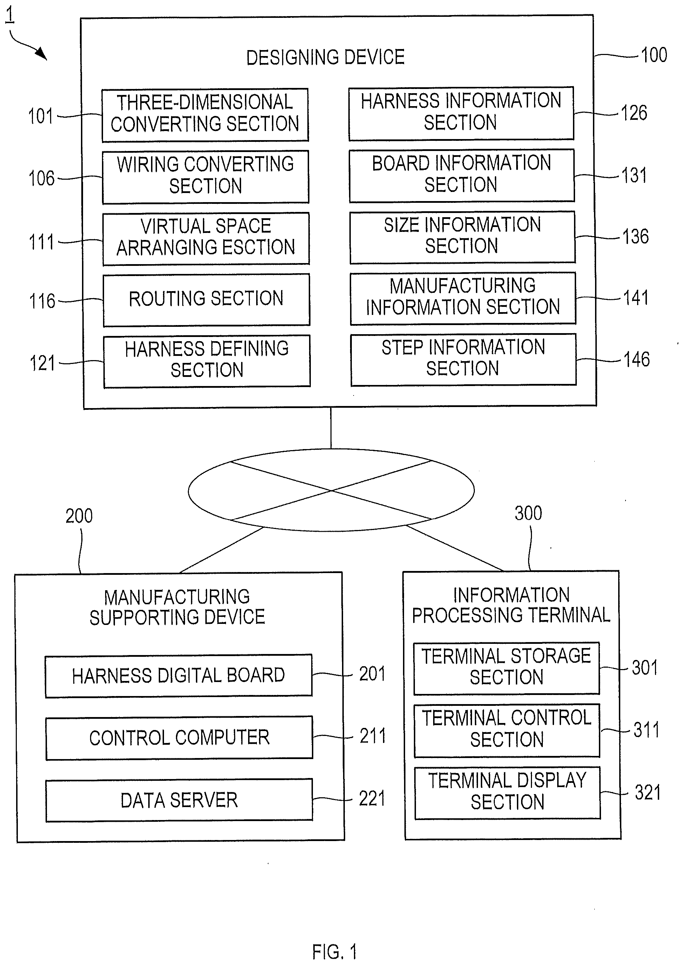

As shown in Fig. 1, the designing support system 1 comprises a designing device 100 that carries out the designing of the wire harness 500, a manufacturing support device 200 that carries out the manufacturing of the wire harness 500, and an information processing terminal 300 that supports the wiring work of the wire harness 500. The designing device 100 and the manufacturing device 200, as well as the designing device 100 and the information processing terminal 300 are connected so that information can be communicated by way of a dedicated information communication line or a known information communication network.

The designing device 100 carries out the designing of the wire harness 500 in a design space, which is a virtual space. The designing device 100 is an information processing device such as a personal computer, a server, and the like including a CPU (Central Processing Unit), a ROM, a RAM, an input/output interface, and the like.

As shown in Fig. 1, a program stored in a storage device such as the ROM, and the like described above cooperatively operates the CPU, the ROM, the RAM, and the input/output interface, and causes them to function as a three-dimensional converting section 101, a wiring converting section 106, a virtual space arranging section 111, a routing section 116, a wire harness defining section 121 (hereinafter also referred to as "harness defining section 121"), a wire harness information section 126 (hereinafter also referred to as "harness information section 126"), a harness digital board information section 131 (hereinafter referred to as "board information section 131 "), a size information section 136, a manufacturing information section 141, and a step information section 146.

The three-dimensional converting section 101 carries out a process of converting two-dimensional CAD (Computer Aided Design) data (two-dimensional information) to at least one part of three-dimensional CAD data (three-dimensional information).

The two-dimensional CAD data may be design information such as a design drawing in which the information related to a device (not shown) having a structural part configuring a vehicle body mounted on a vehicle body is represented two-dimensionally.

The two-dimensional CAD data comprises at least one part of two-dimensional part shape information, which is information on a two-dimensional shape of a structural part configuring the vehicle body, two-dimensional part position information, which is information on a two-dimensional position where the structural part is arranged in the vehicle body, two-dimensional device position information, which is information on a two-dimensional position where the device is arranged in the vehicle body, and two-dimensional connecting position information, which is a two-dimensional position where the electrical wire 501 is to be connected in the relevant device.

The three-dimensional CAD data is information used to generate a model 601 of the vehicle body, to be described below.

The three-dimensional CAD data comprises at least three-dimensional part shape information, which is information on a three-dimensional shape of a structural part configuring the vehicle body, three-dimensional part position information, which is information on a three-dimensional position where the structural part is arranged in the vehicle body, three-dimensional device position information, which is information on a three-dimensional position where the device is arranged in the vehicle body, and three-dimensional connecting position information, which is a three-dimensional position where the electrical wire 501 is to be connected in the relevant device.

The three-dimensional converting section 101 converts the two-dimensional CAD data to the three-dimensional CAD data when the three-dimensional CAD data cannot be acquired. If only the three-dimensional CAD data lacking in information for the generation of the model 601 of the vehicle body can be acquired, the three-dimensional CAD data that compensates for the lacking portion is generated by being converted from the two-dimensional CAD data.

The wiring converting section 106 carries out a process of converting electrical circuit information to at least one part of the wiring information. The electrical circuit information comprises information indicating an electrical connection between the plurality of devices arranged in the vehicle.

The wiring information is also indicated as "From To" list. The wiring information comprises at least device specifying information, which is information specifying a device to which the electrical wire 501 is connected, information specifying a type of the relevant electrical wire 501, length information, which is information representing the length of the relevant electrical wire 501, tolerance information, which is a range of error defined in advance with respect to a value of the length defined for the relevant electrical wire 501, diameter information, which is information representing the diameter of the relevant electrical wire 501, and label character information to be given to the relevant electrical wire 501.

The length information described above may not be included in the wiring information in an initial state, and information on a target length of electrical wire 501 may be included instead of the length information.

The wiring converting section 106 converts the electrical circuit information to the wiring information when the wiring information cannot be acquired. When only the wiring information lacking in information for the production of the wire harness 500 can be acquired, the wiring information that compensates for the lacking portion is generated by being converted from the electrical circuit information.

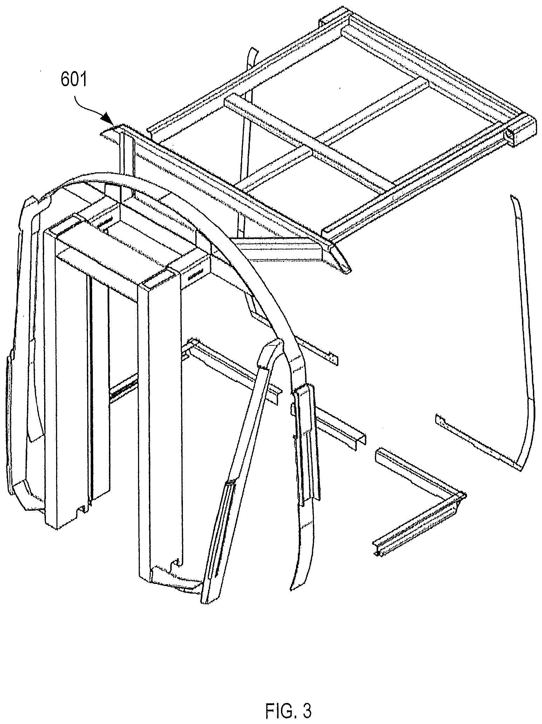

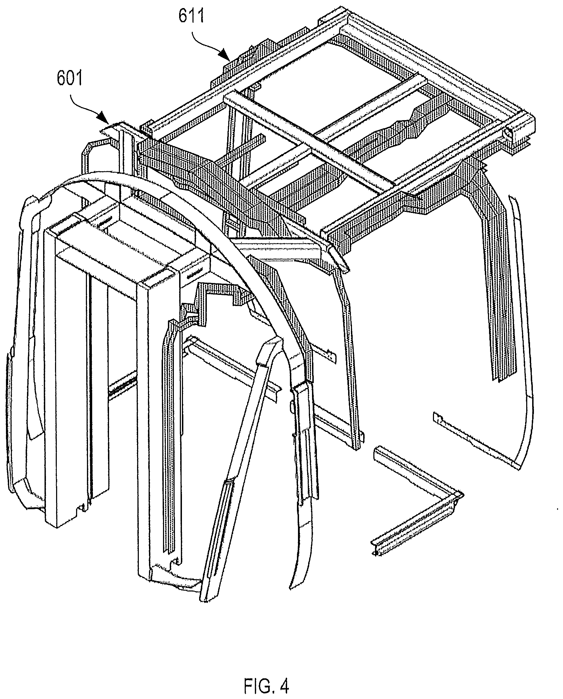

The virtual space arranging section 111 carries out an arithmetic processing of arranging a virtual space 611 (see Fig. 4) where the electrical wire 501 is to be arranged with respect to a model 601 (see Fig. 3) of the vehicle body generated in the design space, which is a virtual three-dimensional space. The content of the arithmetic processing in the virtual space arranging section 111 will be described below.

The virtual space 611 is generated based on the virtual space information. The virtual space 611 is a virtual space set in the design space, and is a space set between the structural parts configuring the vehicle body.

The virtual space information comprises at least space shape information, which is information related to the shape of the virtual space 611, and space position information, which is information on a position where the virtual space 611 is arranged.

The routing section 116 creates wiring path information, which is information on a path in which the electrical wire 501 is arranged in the virtual space 611, based on the wiring information. The content of the arithmetic processing in the routing section 116 will be described below. The wiring path information is also indicated as harness routing data. The wiring path information also comprises figure information for displaying a three-dimensional shape of the electrical wire 501 arranged in the design space.

The defining section 121 carries out an arithmetic processing of bundling the electrical wires 501 arranged in the virtual space 611 and defining the wire harness 500. The content of the arithmetic processing in the defining section 121 will be described below.

The harness information section 126 carries out an arithmetic processing of creating wire harness information for the defined wire harness 500. The content of the arithmetic processing in the harness information section 126 will be described below. The created wire harness information is used for approval process of the designed wire harness 500, and the manufacturing of the wire harness 500.

The board information section 131 carries out an arithmetic processing of creating harness digital board information based on the wire harness information. The harness digital board information is information including figure information displayed on a harness digital board 201, to be described below.

The size information section 136 carries out an arithmetic processing of setting size information related to the size of a board display section 202, to be described below. The board display section 202 is also an arranging surface on which the electrical wire 501 is placed when creating the wire harness 500 in the harness digital board 201.

The manufacturing information section 141 carries out an arithmetic processing of creating manufacturing information including the figure information used for the manufacturing of the wire harness 500 based on the harness digital board information and the size information. The figure information is information displayed on the board display section 202 in the harness digital board 201.

The step information section 146 carries out an arithmetic processing of creating step information corresponding to a wiring step of the wire harness 500 based on the wire harness information and the wiring information. The step information is information that allows a display corresponding to the wiring step of the wire harness 500 on a terminal display section 321 of the information processing terminal 300. For example, it is information that can display the order of the branch line 513 or the connector 502 of the wire harness 500 to carry out the wiring work, display a three-dimensional figure of the wire harness 500 and highlight-display the branch line 513 to carry out the wiring work.

In the present embodiment, an example in which one designing device 100 functions as the virtual space arranging section 111, the routing section 116, the defining section 121, the harness information section 126, the board information section 131, the size information section 136, the manufacturing information section 141, and the step information section 146 will be described, but such functions may be distributed to a plurality of designing devices 100.

For example, a first designing device 100 may function as the virtual space arranging section 111, the routing section 116, the defining section 121, the harness information section 126, and a second designing device 100 may function as the board information section 131, the size information section 136, the manufacturing information section 141, and the step information section 146. The first designing device 100 and the second designing device 100 may be directly connected so as to be able to communicate information, or may be connected so as to be able to communicate information through a server.

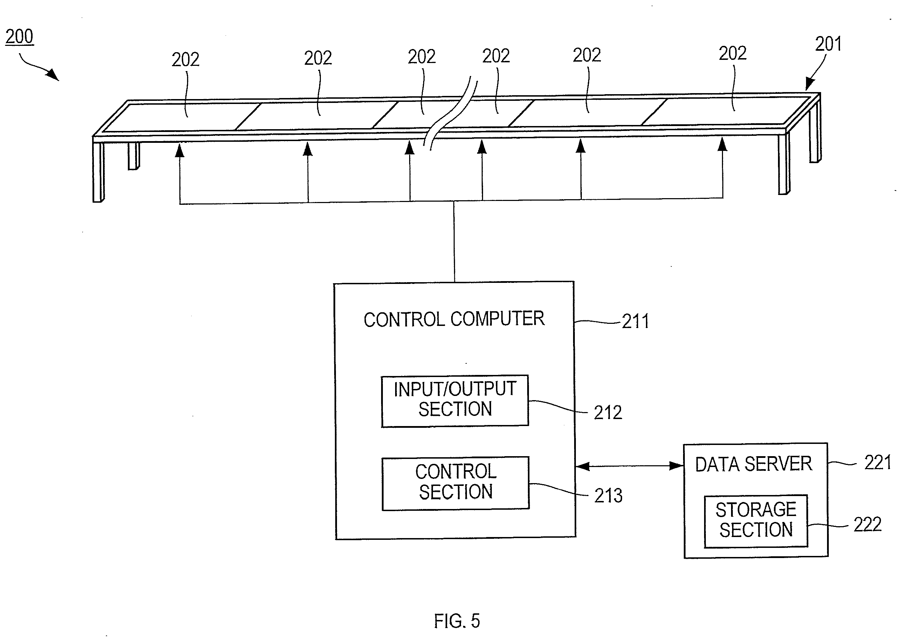

The manufacturing device 200 manufactures the wire harness 500. As shown in Figs. 2 and 5, the manufacturing device 200 comprises the harness digital board 201, a control computer 211, and a data server 221.

The harness digital board 201 is formed to a desk shape used for the manufacturing of the wire harness 500. The harness digital board 201 comprises the board display section 202, which is also a work table on which the wire harness 500 is manufactured.

The board display section 202 is a surface having a width and a length necessary for the manufacturing of the wire harness 500. The board display section 202 is a surface on which the wire harness 500 is manufactured, and is also a display surface on which the figure information is displayed. The board display section 202 is connected to the control computer 211 so as to be able to communicate information, where information related to the figure information to display is transmitted from the control computer 211. The control computer 211 may read the manufacturing information including the figure information from the data server 221.

In the present embodiment, an example in which the display surface of the board display section 202 is a liquid crystal display will be described. The display surface of the board display section 202 is not limited to the liquid crystal display mentioned above, and may be an organic EL (Electroluminescence) display, or may be a projection surface to which the figure information is projected by a projector.

The control computer 211 controls the display of the figure information in the harness digital board 201. In the present embodiment, an example in which the control computer 211 is an information processing device such as a personal computer, and the like including a CPU (Central Processing Unit), a ROM, a RAM, an input/output interface, and the like will be described.

As shown in Fig. 5, a program stored in a storage device such as the ROM, and the like described above cooperatively operates the CPU, the ROM, the RAM, and the input/output interface, and causes them to function as a an input/output section 212 and a control section 213.

The input/output section 212 is connected to the designing device 100, the board display section 202, and the data server 221 so as to be able to communicate information. In the present embodiment, an example in which the board display section 202 and the data server 221 are connected to enable wired information communication by a known method using a LAN (Local Area Network) cable, and the like will be described. An example in which connection with the designing device 100 is such that information can be communicated using a known information communication network will be described.

The control section 213 generates a control signal for controlling the operations of the board display section 202. Furthermore, information related to the manufacturing of the wire harness 500 such as work history, examination results, and the like are stored in the data server 221.

The data server 221 is a server connected to the control computer 211 so as to be able to communicate information through the information communication network configured by the LAN cable, and the like. In the present embodiment, an example in which the data server 221 is an information processing device such as a server, and the like including a CPU, a ROM, a RAM, an input/output interface, and the like will be described.

As shown in Fig. 5, a program stored in a storage device such as the ROM, and the like described above cooperatively operates the CPU, the ROM, the RAM, and the input/output interface, and causes them to function as a storage section 222. Furthermore, information related to the manufacturing of the wire harness 500 such as work history, examination result, and the like acquired by the control computer 211 are stored in the storage section 222. The storage section 222 may store the manufacturing information including the figure information.

The information processing terminal 300 displays information supporting the wiring work of the wire harness 500. In the present embodiment, an example in which the information processing terminal 300 is a table type or a notebook type information processing device that can be carried and moved by a worker including a CPU, a ROM, a RAM, an input/output interface, and the like will be described.

As shown in Fig. 1, a program stored in a storage device such as the ROM, and the like described above cooperatively operates the CPU, the ROM, the RAM, and the input/output interface, and causes them to function as a terminal storage section 301, a terminal control section 311, and a terminal display section 321.

The terminal storage section 301 stores the wiring step information and the wiring path information acquired from the designing device 100. The terminal control section 311 carries out a control of displaying the wiring step information corresponding to the wiring step of the wire harness 500 and the wiring path information. The control content by the terminal control section 311 will be described below.

The terminal display section 321 displays the step information and the wiring path information with respect to a worker carrying out the wiring work. Furthermore, the terminal display section 321 is also an input section such as a touch screen to which the operation on the information processing terminal 300 by the worker is input. In the present embodiment, an example in which the terminal display section 321 is a combination of a liquid crystal display and a touch screen will be described.

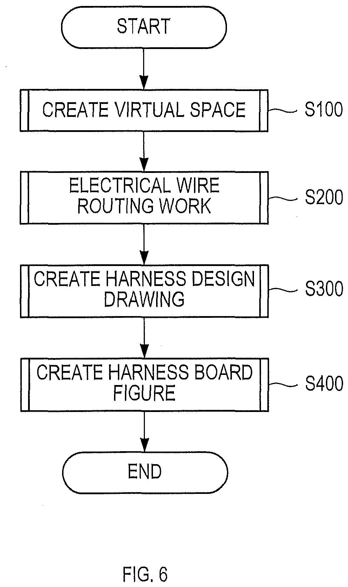

Next, the designing support method of the wire harness 500 in the designing support system 1 having the configuration described above will be described with reference to Figs. 6 to 13.

When the wiring support of the wire harness 500 is started in the designing support system 1 of the present embodiment, the designing device 100 carries out a virtual space creating process (S100) as shown in Fig. 6.

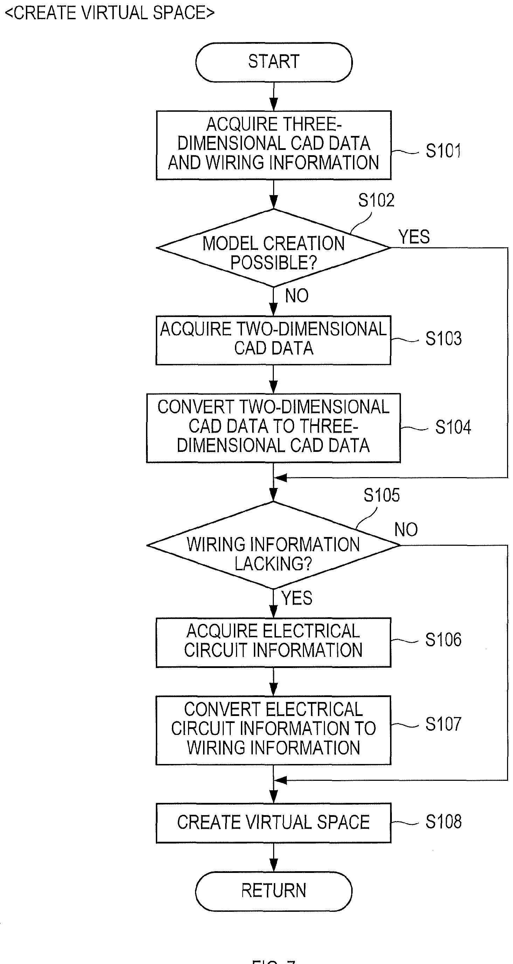

As shown in Fig. 7, the designing device 100 carries out a process described below for the virtual space creating process. First, the designing device 100 carries out a process of acquiring the three-dimensional CAD data and the wiring information (S101). The designing device 100 transmits a signal requesting for the output of the three-dimensional CAD data and the wiring information to the server, and the like storing the three-dimensional CAD data and the wiring information in advance. The three-dimensional CAD data and the wiring information output in response to the output request signal are input and stored in the designing support device 100.

The designing device 100 carries out a process of checking whether the model 601 of the vehicle body can be generated based on the acquired three-dimensional CAD data (S102). In other words, a process of checking whether the three-dimensional CAD data comprises the information necessary for the generation of the model 601 of the vehicle body is carried out.

When it is determined that the model 601 of the vehicle body cannot be generated based on the three-dimensional CAD data (case of NO), the designing device 100 carries out a process of acquiring the two-dimensional CAD data (S103). The case in which determination is made that the model 601 of the vehicle body cannot be generated based on the three-dimensional CAD data includes a case in which the three-dimensional CAD data cannot be acquired, and a case in which the three-dimensional CAD data does not include the information necessary for the generation of the model 601 of the vehicle body.

After acquiring the two-dimensional CAD data, the three-dimensional converting section 101 of the designing device 100 carries out a process of converting the two-dimensional CAD data to the three-dimensional CAD data (S104: three-dimensional converting step). The model 601 of the vehicle body then can be generated based on the converted three-dimensional CAD data.

When it is determined that the model 601 of the vehicle body can be generated based on the three-dimensional CAD data in the determination process of S102 (case of YES), or when the converting process of S104 is carried out, the designing device 100 carries out a process of checking whether the wiring information is lacking (S105). In other words, a process of checking whether the wiring information comprises the device specifying information, and the like for all the electrical wires 501 mounted on the railroad vehicle is carried out.

When determined that the wiring information is lacking (case of YES), the designing device 100 carries out a process of acquiring the electrical circuit information (S106). The case of determining that the wiring information is lacking includes a case in which the wiring information cannot be acquired, and a case in which the device specifying information, and the like are lacking for some electrical wires 501.

After acquiring the electrical circuit information (S105:NO, S107), the wiring converting section 106 of the designing device 100 carries out a process of converting the electrical circuit information to the wiring information (S107: wiring converting step).

After acquiring the three-dimensional CAD data and the wiring information, the designing device 100 carries out a process of creating the virtual space 611 based on the part information of the virtual space 611 (S108).

The shape of the virtual space 611 is defined with reference to the model 601 of the vehicle. For example, the virtual space 611 is arranged between the structural parts configuring the vehicle body of the vehicle. Furthermore, the virtual space 611 is arranged at a position where the electrical wire 501 can be connected to the device arranged on the vehicle body.

The designing device 100 creates virtual space information including the space shape information, which is information related to the shape of the virtual space 611, and the space position information, which is information on a position where the virtual space 611 is arranged.

The created virtual space 611 is checked for presence/absence of interference with the vehicle body, and the like. If interference is found, the virtual space creating process is terminated. The designing device 100 of the designing support system 1 then returns to Fig. 6 and carries out a process of electrical wire routing work (S200).

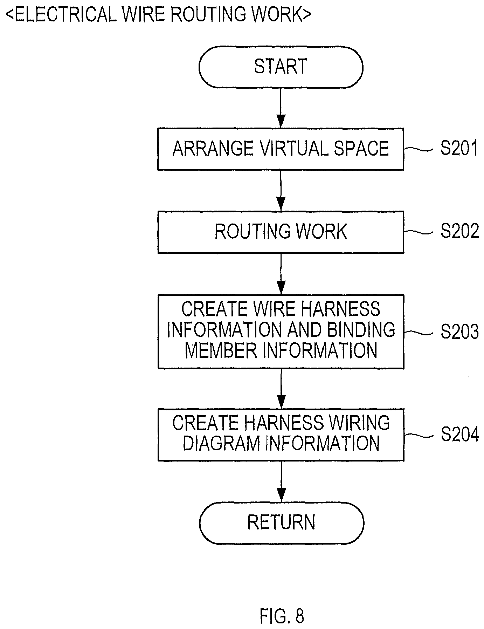

As shown in Fig. 8, the designing device 100 carries out a process described below for the process of electrical wire routing work. First, the virtual space arranging section 111 of the designing device 100 carries out a process of arranging the model 601 of the vehicle and the virtual space 611 in the design space (S201: virtual space step). The model 601 of the vehicle body is generated in the design space based on the three-dimensional CAD data. The virtual space 611 is a space approved by the virtual space creating process of S100, and is generated in the design space based on the virtual space information.

After the virtual space 611 is arranged, the routing section 116 of the designing device 100 carries out a routing work, which is a process of wiring the electrical wire 501 in the virtual space 611 (S202: routing step). The routing work is also indicated as a three-dimensional wiring design. The wiring path information including the figure information for displaying the three-dimensional shape of the electrical wire 501 is created by the routing work and the line organizing process, to be described below.

The process of wiring the electrical wire 501 is carried out based on the device specifying information included in the wiring information, the device position information included in the three-dimensional CAD data, the connecting position information, the extra length value or a value of the length of the extra length provided at at least one of the vicinity of a starting point (From), which is one end of the electrical wire 501, and the vicinity of an ending point (To), which is the other end, as well as the passing position information, which is the three-dimensional position where the electrical wire passes.

That is, the device connected to the starting point and the device connected to the ending point of the predetermined electrical wire 501 are specified based on the wiring information in the routing work. The positions for arranging the specified device on the starting point side and the device on the ending point side, and the position to which the electrical wire 501 is connected in the relevant device are specified. The routing section 116 carries out a process of wiring so that the electrical wire 501 is connected to the specified device via the virtual space 611.

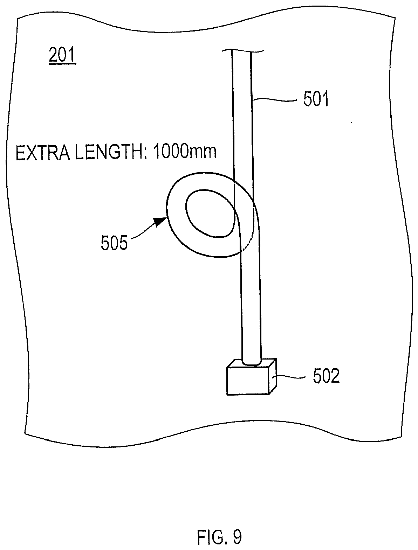

Furthermore, the wiring process of providing the extra length at at least one of the starting point or the ending point of the electrical wire 501 is carried out based on the extra length value included in the wiring information in the routing work. As shown in Fig. 9, in the wiring process, display is made on the harness digital board 201 in a mode wherein an extra length displaying section 505 is arranged at a position where the extra length is provided in the electrical wire 501. The extra length displaying section 505 displays on the harness digital board 201 that the extra length is provided in a format defined in advance. The wiring path information created by the routing section 116 comprises extra length display information for displaying the extra length displaying section 505.

In the present embodiment, an example in which the extra length displaying section 505 is in a format of arranging and representing the electrical wire 501 in a ring shape or an annular shape will be described. Furthermore, an example of displaying the extra length value on the extra length displaying section 505 will be described.

Other displaying formats of the extra displaying section 505 include a format of arranging and representing the electrical wire 501 in a shape other than the ring shape or the annular shape, a format of displaying with a predetermined color, a format of displaying with a predetermined symbol, and the like. Moreover, a method of representing the extra length value includes an example of representing the extra length value with the size of the diameter of the ring shape or the annular shape, and number of windings.

Furthermore, the wiring process of the electrical wire 501 is carried out based on the passing position information included in the wiring information in the routing work. In the relevant wiring process, the electrical wire 501 is arranged passing the passing position (also indicated as passing point), which is the three-dimensional position specified by the passing position information.

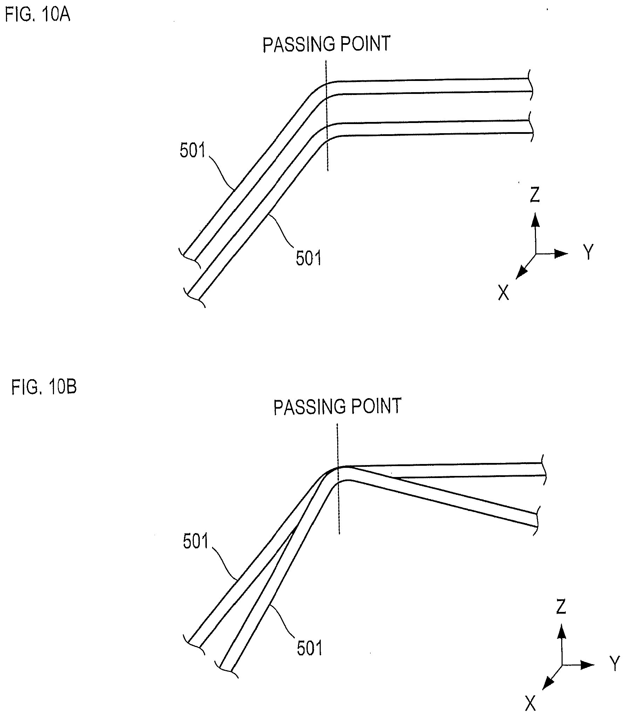

FIG. 10A illustrates an example in which the adjacent electrical wires 501 are arranged by the relevant wiring process. In this example, the passing point is specified using a three-dimensional coordinate configured by an orthogonal X-axis (front and back direction), Y axis (left and right direction), and Z axis (upper limit direction). For the passing point of the adjacent electrical wire 501, the values of the X axis and the Y axis are the same, and the value of the Z axis is different. When seen from the Z axis side, the adjacent electrical wires 501 appear as if arranged passing the same passing point. However, the adjacent electrical wires 501 do not interfere as the position in the Z axis direction is different.

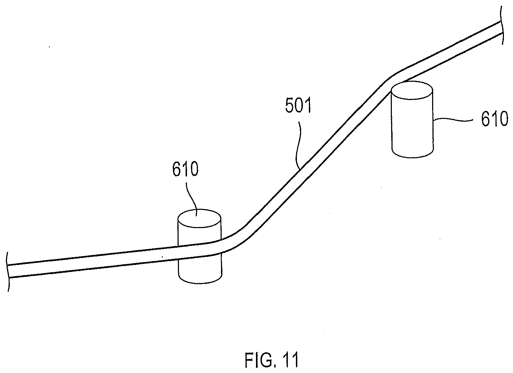

Furthermore, the shape of the electrical wire 501 at the passing position is defined based on the boundary information included in the passing position information. As illustrated in FIG. 11, in the present embodiment, an example in which the shape of the electrical wire 501 at the passing position is defined when the electrical wire 501 is bent along the peripheral surface of the boundary section 610 having a cylindrical or a circular column shape generated based on the boundary information will be described.

In this case, the curvature of the electrical wire 501 at the passing position is defined by the value of the diameter of the boundary section 610. Furthermore, the angle at which the electrical wire 501 is bent is defined by the arranging position of the plurality of boundary sections 610. The arranging position of the boundary section 610 is defined based on the passing position information.

When the routing work is carried out, the designing device 100 carries out the process of creating the wire harness information as illustrated in FIG. 8 (S203: harness defining step). First, a process of defining the wire harness 500 carried out by the defining section 121 of the designing device 100 is carried out. Thereafter, the process of creating the wire harness information by the harness information section 126 is carried out.

The defining section 121 carries out an arithmetic processing of bundling a predetermined number of electrical wires 501 and defining the wire harness 500. The predetermined number of electrical wires 501 are selected according to a predetermined rule from the plurality of electrical wires 501 arranged in the virtual space 611.

The predetermined rule comprises having the number of electrical wires 501 to bundle into one wire harness 500 limited to for example, one hundred, bundling the electrical wires 501 connected to the same device into the wire harness 500, selecting the electrical wires 501 to bundle into the wire harness 500 based on the electrical type, and the like. A method of selecting based on the electrical type includes a method of selecting that of the same type (e.g., alternating current electrical wire, direct current electrical wire, shield line) of electrical wire 501.

After the process of defining the wire harness 500 is carried out, the harness information section 126 carries out a process of creating the wire harness information based on the harness three-dimensional information, which is the information on the three-dimensional shape of the wire harness 500. The wire harness information is the information related to the shape of the wire harness 500 such as the length information of the main line 511 of the wire harness 500, the position information of the branched point 512, the length information of the branch line 513, and the like. The wire harness information also comprises the information that can display the wire harness 500 as a two-dimensional figure.

Furthermore, the wire harness information comprises the information related to the electrical wire 501 configuring the wire harness 500 such as the information specifying the electrical wire 501 configuring the wire harness 500, the length information of the relevant electrical wire 501, the diameter information of the electrical wire 501, the information specifying the electrical wire 501 configuring the branch line 513, and the like.

After the wire harness information is created, the designing device 100 carries out a process of creating the harness wiring diagram information (S204). The harness wiring diagram information is the information of the two-dimensional figure related to the wire harness 500, and is the information on the figure indicating how to wire the wire harness 500 with respect to the vehicle body.

After the harness wiring diagram information is created, the process of the electrical wire routing work is terminated. The designing device 100 of the designing support system 1 then returns to Fig. 6 and carries out a harness design drawing creating process (S300).

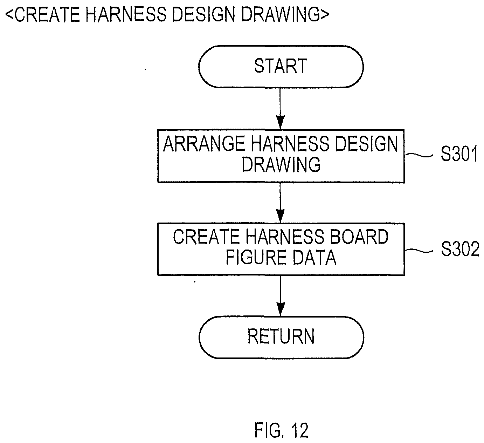

As shown in Fig. 12, the designing device 100 carries out a process described below for the harness design drawing creating process. First, the designing device 100 carries out the process of creating the harness design drawing based on the wiring information and the harness wiring drawing information (S301). The harness design drawing may be created based on the harness wiring drawing information instead of the wire harness information.

The harness design drawing is created in units of wire harness, and is created to a size (e.g., A3 size) defined in advance. One wire harness 500 is shown in one figure (figure of one part number). However, in the case of a large wire harness 500, the wire harness 500 may be divided and shown over a plurality of figures (figures of a plurality of part numbers).

The harness design drawing is described in full scale (1/1 scale) in which the shape of the wire harness 500 is the same size as the actual wire harness 500. However, the shape is deformed (changed/reduced) to show the shape of the wire harness 500 within a frame of a predefined paper size (e.g., A3 size).

The designing support device 100 carries out a computation of obtaining the reduction scale of the harness design diagram, the angle of the branch line 513 branched with respect to the main line 511, and the like based on the actual length of the wire harness 500, the predefined paper size, and the like, and outputs the same as the harness design drawing.

When the harness design drawing is divided into a plurality of drawings, the designing support device 100 carries out a computation of obtaining the reduction scale, the angle of the branch line 513 branched with respect to the main line 511, and the like based on the number of drawings the drawing is further divided into.

After the harness design diagram is created, the board information section 131 of the designing device 100 carries out a process of creating the harness board figure data (S302). The harness digital board information comprises, for example, information on the two-dimensional figure of the wire harness 500, information specifying the electrical wire 501 configuring the wire harness 500, and information specifying the connector 502 attached to the electrical wire 501.

After the harness design drawing and the harness board figure data are created, the harness design drawing creating process is terminated. The designing device 100 of the designing support system 1 then returns to Fig. 6 and carries out a harness board figure creating process (S400).

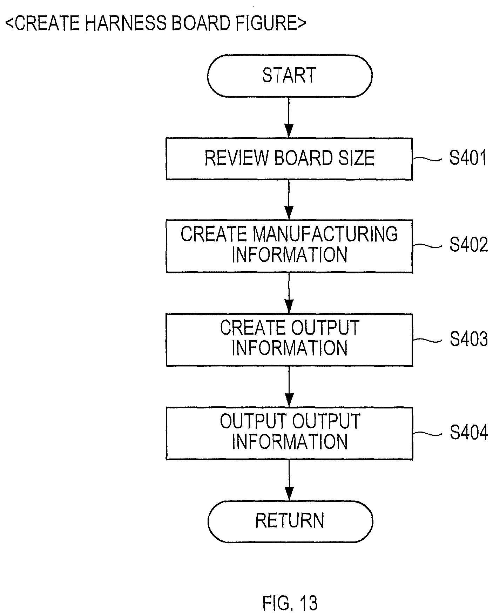

As shown in Fig. 13, the designing device 100 carries out a process described below for the harness board figure creating process. First, the size information section 136 of the designing device 100 carries out a process of reviewing the board size (S401).

The size information section 136 carries out an arithmetic processing of setting size information related to the size of the board display section 202. The board display section 202 is a display surface on which the figure information, to be described below, is displayed, and is also an arranging surface on which the electrical wire 501 is placed when creating the wire harness 500 in the harness digital board 201.

After the size information is set, the manufacturing information section 141 of the designing device 100 carries out a process of creating the manufacturing information including the figure information (S402). The figure information is information displayed on the board display section 202 in the harness digital board 201.

The wire harness 500 displayed by the figure information is displayed with the same length (full scale or 1/1 scale) as the actual wire harness 500 in the length direction of the wire harness 500.

The same length means satisfying the following equation (1), where L is the length of the actual wire harness 500 and L2 is the length of the displayed wire harness 500. That is, an absolute value of a difference of the length L1 of the actual wire harness 500 and the length L2 of the displayed wire harness 500 is to be smaller than 0.1% with respect to the length L1 of the actual wire harness 500.

[Equation 1]

$$\frac{|L1-L2|}{L1} \times 100 < 0.1 \qquad \cdots \ (1)$$

With respect to the radial direction or the width direction of the wire harness 500, display may be made on the board display section 202 with the same thickness or the same diameter as the actual wire harness 500. In this case, from what extent of thickness of the cable the wire harness 500 is configured can be visually recognized.

Furthermore, compared to when not displayed with the same thickness or the same diameter, the worker can easily notice if the number of electrical wires 501 arranged on the board display section 202 is too much or too little when producing the wire harness 500. As a result, work mistakes in producing the wire harness 500 can be easily reduced.

The same thickness or the same diameter means satisfying the following equation (2), where D1 is the thickness of the actual wire harness 500 and D2 is the thickness of the displayed wire harness 500. That is, an absolute value of a difference of the thickness D1 of the actual wire harness 500 and the thickness D2 of the displayed wire harness 500 is to be smaller than 1% with respect to the thickness D1 of the actual wire harness 500.

[Equation 2]

$$\frac{|D1-D2|}{D1} \times 100 < 1 \qquad \cdots \ (2)$$

On the other hand, for the radial direction or the width direction of the wire harness 500, display of the size not based on the actual wire harness 500 may be made. In this case, in particular, the figure information can be easily created by having the size in the radial direction (width direction) at all the main lines 511 and the branch lines 513 displayed on the board display section 202 the same.

For example, the thickness D2 of the displayed wire harness 500 may be greater (thicker) than the thickness D1 of the actual wire harness 500. Specifically, the absolute value of the difference of the thickness D1 of the actual wire harness 500 and the thickness D2 of the displayed wire harness 500 may be greater than or equal to 1% with respect to the thickness D1 of the actual wire harness 500.

When the thickness D2 of the displayed wire harness 500 is displayed large, the displayed wire harness 500 is less likely to be hidden by the arranged electrical wire 501 even if the electrical wire 501 is arranged on the board display section 202. Thus, the workability of when producing the wire harness 500 can be easily enhanced.

However, the shapes of the main line 511 and the branch line 513 are changed to display the wire harness 500 within the frame of the size defined by the size information. There is also a case where the plurality of wire harnesses 500 are simultaneously displayed on the board display section 202.

After the manufacturing information is created, the designing device 100 carries out a process of creating output information (S403). The output information is information created based on the manufacturing information. The output information comprises the CAD data created from the figure information and the electronic data (e.g., PDF (Portable Document Format)) that can display figure information on various types of information terminals, the material table information, and the wiring information for manufacturing.

After the output information is created, the designing device 100 carries out an output process of the output information (S404). The created output information is distributed to the production site where the manufacturing device 200 is arranged.

According to the designing support system 1 having the configuration described above and the designing support method, the path on which the electrical wire 501 is arranged is set based on the virtual space, and then the wire harness 500 can be defined. Thus, the extra length in the electrical wire 501 can be easily reduced compared to when setting the path in which the electrical wire 501 is arranged based on the value obtained by measuring the actual object of the vehicle body of the railroad vehicle.

Since the path is set by arranging the electrical wire 501 in the virtual space, whether the gap for passing the wire harness 500 can be ensured can be checked at the setting stage. Thus, at the stage of wiring the wire harness 500 in the vehicle body, the wiring path of the wire harness 500 does not need to be changed, and the extra length in the electrical wire 501 can be easily reduced.

The two-dimensional CAD data can be converted to all or one part of the three-dimensional CAD data by the three-dimensional converting section 101. Thus, even if the three-dimensional CAD data does not exist or one part of the three-dimensional CAD data is lacking, this can be compensated with the three-dimensional CAD data converted from the two-dimensional CAD data.

The electrical circuit information can be converted to all or one part of the wiring information by the wiring converting section 106. Thus, even if the wiring information does not exist or one part of the wiring information is lacking, this can be compensated with the wiring information converted from the electrical circuit information.

The setting of the extra length can be displayed when displaying the arrangement of the electrical wire 501 on the terminal display section 321 of the information processing terminal 300 by including the extra length display information in the wiring path information. If the setting of the extra length is not displayed, it becomes difficult for the worker for manufacturing the wire harness 500, the worker for wiring the wire, and the like to grasp whether or not the electrical wire 501 has an extra length. Thus, the work for wiring the wire harness 500 becomes difficult to carry out.

The presence/absence of the extra length setting in the electrical wire 501 can be easily grasped by displaying the setting of the extra length on the terminal display section 321 of the information processing terminal 300. The processing that takes into consideration the extra length value is facilitated when processing the electrical wire 501 based on the wiring information by including the extra length value in the wiring information.

The extra length in the electrical wire 501 can be easily reduced by including the passing position information or the three-dimensional position where the electrical wire 501 passes in the wiring information compared to when not including the passing position information. For example, when specifying the passing point at the two-dimensional position, the plurality of electrical wires 501 have a possibility of being wired in the path passing the same passing point, as shown in Fig. 10B. In reality, the plurality of electrical wires 501 interfere and do not pass the same passing point, and thus the electrical wires 501 are wired in the path different from the design. In other words, the precision of the length of the electrical wire 501 set in the design is likely to degrade, and the reduction of the extra length becomes difficult to achieve.

On the contrary, the setting of the path where the plurality of electrical wires 501 interfere with each other can be easily avoided, as shown in Fig. 10A, by including the passing position information or the three-dimensional position in the wiring information. Thus, the precision of the length of the electrical wire 501 set in the design can be easily enhanced, and the reduction of the extra length can be easily achieved.

The reduction of the extra length in the electrical wire 501 becomes easier to achieve by including the boundary information defining the shape of the electrical wire 501 passing the passing position in the passing position information. For example comparing the case of not including the boundary information, and the case of defining the bent shape of the electrical wire 501 at the passing position as the boundary information, the length of the electrical wire 501 becomes closer to the actual length when the boundary information is included. In other words, the precision of the length of the electrical wire 501 set in the design can be easily enhanced, and the reduction of the extra length can be easily achieved.

The technical scope of the present disclosure is not limited to the embodiment described above, and various changes can be made within a scope not deviating from the purpose of the present disclosure. For example, the target to which the wire harness 500 is wired in the embodiment described above may be a vehicle body of an automobile, a plane body of an airplane, a ship body of a ship, and the like, and is not limited to a railroad vehicle.

**Claims**

1. A computer-implemented wire harness designing support method comprising:

   a routing step (S202) of creating, based on wiring information and three-dimensional (3D) design data of a moving body, the moving body being a vehicle body such as a vehicle body of an automobile, a plane body of an airplane, a ship body of a ship, or a vehicle body of a railroad vehicle, wiring path information, which is path information of a plurality of electrical wires (501) arranged with respect to the 3D design data, wherein the electrical wire (501) is arranged based on wiring information comprising information on a connecting relationship of a plurality of devices arranged on the moving body and the electrical wire (501), the wiring information including passing position information which is a three-dimensional position where the electrical wire (501) passes, the passing position information including boundary information defining a shape of the electrical wire (501) passing the position, and the three-dimensional position being specified such that the electrical wires (501) adjacent to each other have different three-dimensional positions; and

a harness defining step (S203) of bundling the electrical wires (501) selected to be equal or less than a predetermined number in number according to a predetermined rule from the wiring path information to define a wire harness; and

a step of creating a harness design drawing of a unit of the wire harness defined in the harness defining step (S203) ; and

a step (S401, S402, S403, S404) of creating and outputting a harness board figure based on the harness design drawing.

2. The computer-implemented wire harness designing support method according to claim 1, further comprising a three-dimensional converting step (S104) of converting two-dimensional (2D) design data of the moving body to at least one part of the 3D design data before the routing step (S202).

3. The computer-implemented wire harness designing support method according to claim 1 or 2, further comprising a wiring converting step (S107) of converting electrical circuit information indicating an electrical connection among the plurality of devices to at least one part of the wiring information before the routing step (S202).

4. The computer-implemented wire harness designing support method according to any one of claims 1 to 3,

   wherein the wiring path information comprises extra length display information for displaying an extra length in a format defined in advance, and

   the wiring information comprises an extra length value, which is a value of the length of the extra length provided at at least one of one end or another end of the electrical wire (501).

5. A data processing system configured as a wire harness designing support system comprising:

   a means (116) for carrying out a routing step (S202) of creating, based on wiring information and three-dimensional (3D) design data of a moving body, the moving body being a vehicle body of an automobile, a plane body of an airplane, a ship body of a ship, or a vehicle body of a railroad vehicle, wiring path information, which is path information of a plurality of electrical wires (501) arranged with respect to the 3D design data, wherein the electrical wire (501) is arranged based on wiring information comprising information on a connecting relationship of a plurality of devices arranged on the moving body and the electrical wire (501), the wiring information including passing position information that is a three-dimensional position where the electrical wire (501) passes, the passing position information including boundary information defining a shape of the electrical wire (501) passing the position, and the three-dimensional position being specified such that the electrical wires (501) adjacent to each other have different three-dimensional positions; and

   a means (121) for carrying out a harness defining step (S203) of bundling the electrical wires (501) selected to be a predetermined number or less in number according to a predetermined rule from the wiring path information to define a wire harness; and

   a means for carrying out a step of creating a harness design drawing of a unit of the wire harness defined in the harness defining step (S203) ; and

   a means for carrying out a step (S401, S402, S403, S404) of creating and outputting a harness board figure based on the harness design drawing.

6. The data processing system according to claim 5, further comprising a means (101) for carrying out a three-dimensional converting step (S104) of converting two-dimensional (2D) design data of the moving body to at least one part of the 3D design data.

7. The data processing system according to claim 5 or 6, wherein the means (116) for carrying out the routing step (S202) carries out the arrangement of the electrical wire (501) based on wiring information comprising information on a connecting relationship of a plurality of devices arranged on the moving body and the electrical wire (501).

8. The data processing system according to claim 7, further comprising a means (106) for carrying out a wiring converting step (S107) of converting electrical circuit information indicating an electrical connection among the plurality of devices to at least one part of the wiring information.

9. The data processing system according to claim 7 or 8,

wherein the wiring path information comprises extra length display information for displaying an extra length in a format defined in advance, and
the wiring information comprises an extra length value, which is a value of a length of the extra length provided at at least one of one end or another end of the electrical wire (501).

10. The data processing system according to any one of claims 7 to 9,

wherein the wiring information comprises passing position information, which is a three-dimensional position, where the electrical wire (501) passes, and
the passing position information comprises boundary information defining a shape of the electrical wire (501) passing the position.

## Patentansprüche

1. Computerimplementiertes Kabelbaum-Entwurfsunterstützungsverfahren, umfassend:

einen Leitungsführungsschritt (S202) des Erzeugens, basierend auf Verdrahtungsinformationen und dreidimensionalen (3D) Entwurfsdaten eines beweglichen Körpers, wobei der bewegliche Körper ein Fahrzeugkörper ist, wie beispielsweise ein Fahrzeugkörper eines Automobils, ein Flugzeugkörper eines Flugzeugs, ein Schiffskörper eines Schiffs oder ein Fahrzeugkörper eines Schienenfahrzeugs, von Verdrahtungspfadinformationen, die Pfadinformationen einer Vielzahl von elektrischen Drähten (501) sind, die in Bezug auf die 3D-Entwurfsdaten angeordnet werden, wobei der elektrische Draht (501) basierend auf Verdrahtungsinformationen angeordnet wird, die Informationen über eine Verbindungsbeziehung einer Vielzahl von Einrichtungen, die auf dem beweglichen Körper angeordnet werden, und des elektrischen Drahts (501) umfassen, wobei die Verdrahtungsinformationen Führungspositionsinformationen umfassen, die eine dreidimensionale Position sind, an welcher der elektrische Draht (501) geführt wird, wobei die Führungspositionsinformationen Begrenzungsinformationen umfassen, die eine Form des elektrischen Drahts (501) definieren, der durch die Position geführt wird, und die dreidimensionale Position so angegeben wird, dass die elektrischen Drähte (501), die einander benachbart sind, unterschiedliche dreidimensionale Positionen aufweisen; und
einen Baumdefinitionsschritt (S203) des Bündelns der elektrischen Drähte (501), deren Anzahl gemäß einer vorbestimmten Regel von den Verdrahtungspfadinformationen so ausgewählt wird, dass sie gleich oder kleiner als eine vorbestimmte Anzahl ist, um einen Kabelbaum zu definieren, und
einen Schritt des Erzeugens einer Baumentwurfzeichnung einer Einheit des Kabelbaums, der in dem Baumdefinitionsschritt (S203) definiert wurde; und einen Schritt (S401, S402, S403, S404) des Erzeugens und Ausgebens einer Legebrettfigur basierend auf der Baumentwurfzeichnung.

2. Computerimplementiertes Kabelbaum-Entwurfsunterstützungsverfahren nach Anspruch 1, das ferner einen dreidimensionalen Konvertierungsschritt (S104) zum Konvertieren zweidimensionaler (2D) Entwurfsdaten des beweglichen Körpers in mindestens einen Teil der 3D-Entwurfsdaten vor dem Leitungsführungsschritt (S202) umfasst.

3. Computerimplementiertes Kabelbaum-Entwurfsunterstützungsverfahren nach Anspruch 1 oder 2, das ferner einen Verdrahtungskonvertierungsschritt (S107) des Konvertierens elektrischer Schaltungsinformationen, die eine elektrische Verbindung unter der Vielzahl von Einrichtungen angeben, in mindestens einen Teil der Verdrahtungsinformationen vor dem Leitungsführungsschritt (S202) umfasst.

4. Computerimplementiertes Kabelbaum-Entwurfsunterstützungsverfahren nach einem der Ansprüche 1 bis 3,

wobei die Verdrahtungspfadinformationen Zusatzlängen-Anzeigeinformationen zum Anzeigen einer Zusatzlänge in einem im Voraus definierten Format umfassen, und
die Verdrahtungsinformationen einen Zusatzlängenwert umfassen, der ein Wert der Länge der Zusatzlänge ist, die an mindestens einem von einem Ende oder einem anderen Ende des elektrischen Drahtes (501) bereitgestellt wird.

5. Datenverarbeitungssystem, das als ein Kabelbaum-Entwurfsunterstützungssystem ausgestaltet ist, umfassend:

ein Mittel (116) zum Durchführen eines Leitungsführungsschritts (S202) des Erzeugens, basierend auf Verdrahtungsinformationen und dreidimensionalen (3D) Entwurfsdaten eines beweglichen Körpers, wobei der bewegliche Körper ein Fahrzeugkörper eines Automobils, ein Flugzeugkörper eines Flugzeugs, ein Schiffskörper eines Schiffs oder ein Fahrzeugkörper eines Schienenfahrzeugs ist, von Verdrahtungspfadinformationen, die Pfadinformationen einer Vielzahl von elektrischen Drähten (501) sind, die in Bezug auf die 3D-Entwurfsdaten angeordnet werden, wobei der elektrische Draht (501) basierend auf Verdrahtungsinformationen angeordnet wird, die Informationen über eine Verbindungsbeziehung einer Vielzahl von Einrichtungen, die auf dem beweglichen Körper angeordnet werden, und des elektrischen Drahts (501) umfassen, wobei die Verdrahtungsinformationen Führungspositionsinformationen umfassen, die eine dreidimensionale Position sind, an welcher der elektrische Draht (501) geführt wird, wobei die Führungspositionsinformationen Begrenzungsinformationen umfassen, die eine Form des elektrischen Drahts (501) definieren, der durch die Position geführt wird, und die dreidimensionale Position so angegeben wird, dass die elektrischen Drähte (501), die einander benachbart sind, unterschiedliche dreidimensionale Positionen aufweisen; und
ein Mittel (121) zum Durchführen eines Baumdefinitionsschritts (S203) des Bündelns der elektrischen Drähte (501), deren Anzahl gemäß einer vorbestimmten Regel von den Verdrahtungspfadinformationen so ausgewählt wird, dass sie gleich oder kleiner als eine vorbestimmte Anzahl ist, sodass ein Kabelbaum definiert wird; und
ein Mittel zum Durchführen eines Schritts des Erzeugens einer Baumentwurfszeichnung einer Einheit des Kabelbaums, der in dem Baumdefinitionsschritt (S203) definiert wurde; und
ein Mittel zum Durchführen eines Schritts (S401, S402, S403, S404) des Erzeugens und Ausgebens einer Legebrettfigur basierend auf der Baumentwurfszeichnung.

6. Datenverarbeitungssystem nach Anspruch 5, das ferner ein Mittel (101) zum Durchführen eines dreidimensionalen Konvertierungsschritts (S104) des Konvertierens zweidimensionaler (2D) Entwurfsdaten des beweglichen Körpers in mindestens einen Teil der 3D-Entwurfsdaten umfasst.

7. Datenverarbeitungssystem nach Anspruch 5 oder 6, wobei das Mittel (116) zum Durchführen des Leitungsführungsschritts (S202) die Anordnung des elektrischen Drahts (501) basierend auf Verdrahtungsinformationen durchführt, die Informationen über eine Verbindungsbeziehung einer Vielzahl von Einrichtungen, die an dem beweglichen Körper angeordnet sind, und des elektrischen Drahts (501) umfassen.

8. Datenverarbeitungssystem nach Anspruch 7, das ferner ein Mittel (106) zum Durchführen eines Verdrahtungskonvertierungsschritts (S107) des Konvertierens elektrischer Schaltungsinformationen, die eine elektrische Verbindung unter der Vielzahl von Einrichtungen angeben, in mindestens einen Teil der Verdrahtungsinformationen umfasst.

9. Datenverarbeitungssystem nach Anspruch 7 oder 8,

wobei die Verdrahtungspfadinformationen Zusatzlängen-Anzeigeinformationen zum Anzeigen einer Zusatzlänge in einem im Voraus definierten Format umfassen, und
die Verdrahtungsinformationen einen Zusatzlängenwert umfassen, der ein Wert einer Länge der Zusatzlänge ist, die an mindestens einem von einem Ende oder einem anderen Ende des elektrischen Drahts (501) bereitgestellt ist.

10. Datenverarbeitungssystem nach einem der Ansprüche 7 bis 9,

wobei die Verdrahtungsinformationen Führungspositionsinformationen umfassen, die eine dreidimensionale Position sind, wo der elektrische Draht (501) geführt wird, und
die Führungspositionsinformationen Begrenzungsinformationen umfassen, die eine Form des elektrischen Drahts (501) definieren, der durch die Position geführt wird.

**Revendications**

1. Un procédé mis en oeuvre par ordinateur, d'aide à la conception de faisceaux électriques, comprenant :

une étape routinière (S202) consistant à créer, sur la base d'informations de câblage et de données de conception tridimensionnelles (3D) d'un corps en mouvement, le corps en mouvement étant un corps de véhicule telle qu'une corps de véhicule d'une automobile, un corps plan d'un avion, un corps de navire d'un navire, ou un corps de véhicule d'un véhicule ferroviaire, des informations de cheminement de câblage, qui sont des informations de cheminement d'une pluralité de fils électriques (501) agencés par rapport aux données de conception 3D, le fil électrique (501) étant agencé sur la base d'informations de câblage comprenant des informations sur une relation de connexion d'une pluralité de dispositifs agencés sur le corps mobile et le fil électrique (501), les informations de câblage comprenant des informations de position de passage qui sont une position tridimensionnelle selon laquelle le fil électrique (501) passe, les informations de position de passage comprenant des informations de limite définissant une forme du fil électrique (501) passant la position, et la position tridimensionnelle étant spécifiée de sorte que les fils électriques (501) adjacents les uns aux autres aient des positions tridimensionnelles différentes ; et

une étape (S203) de définition de faisceau consistant à regrouper les fils électriques (501) sélectionnés pour être égaux ou inférieurs à un nombre prédéterminé en nombre selon une règle prédéterminée à partir des informations de cheminement de câblage pour définir un faisceau de câbles ; et

une étape de création d'un dessin de conception de faisceau d'une unité du faisceau de câbles défini à l'étape (S203) de définition de faisceau ;, et

une étape (S401, S402, S403, S404) de création et d'émission d'une figure de planche de faisceau basée sur le dessin de conception de faisceau.

2. Le procédé mis en oeuvre par ordinateur, d'assistance à la conception de faisceaux de câbles, selon la revendication 1, comprenant en outre une étape (S 104) de conversion tridimensionnelle consistant à convertir des données de conception bidimensionnelles (2D) du corps en mouvement en au moins une partie des données de conception 3D. avant l'étape routinière (S202).

3. Le procédé mis en oeuvre par ordinateur, d'assistance à la conception de faisceaux de câbles, selon la revendication 1 ou la revendication 2, comprenant en outre une étape (S107) de conversion de câblage consistant à convertir des informations de circuit électrique indiquant une connexion électrique parmi la pluralité de dispositifs en au moins une partie des informations de câblage, avant l'étape routinière (S202).

4. Le procédé mis en oeuvre par ordinateur, d'assistance à la conception de faisceaux de câbles, selon l'une quelconque des revendications 1 à 3,

dans lequel les informations de cheminement de câblage comprennent des informations d'affichage de longueur supplémentaire pour afficher une longueur supplémentaire dans un format défini à l'avance, et

les informations de câblage comprennent une valeur de longueur supplémentaire, qui est une valeur de la longueur de la longueur supplémentaire fournie à au moins une parmi une extrémité ou une autre extrémité du fil électrique (501).

5. Un système de traitement de données configuré comme un système d'aide à la conception de faisceaux de câbles comprenant :

un moyen (116) pour mettre en oeuvre une étape routinière (S202) consistant à créer, sur la base d'informations de câblage et de données de conception tridimensionnelles (3D) d'un corps en mouvement, le corps en mouvement étant un corps de véhicule d'une automobile, un corps plan d'un avion, un corps de navire d'un navire ou un corps de véhicule de véhicule ferroviaire, des informations de cheminement de câblage, qui sont des informations de cheminement d'une pluralité de fils électriques (501) agencés par rapport aux données de conception 3D, le fil électrique (501) étant agencé sur la base d'informations de câblage comprenant des informations sur une relation de connexion d'une pluralité de dispositifs agencés sur le corps mobile et le fil électrique (501), les informations de câblage comprenant des informations de position de passage qui sont une position tridimensionnelle selon laquelle le fil électrique (501) passe, les informations de position de passage comprenant des informations de limite définissant une forme du fil électrique (501) passant la position, et la position tridimensionnelle étant spécifiée de sorte que les fils électriques (501) adjacents les uns aux autres aient des positions tridimensionnelles différentes ; et

un moyen (121) pour mettre en oeuvre une étape (S203) de définition de faisceau consistant à regrouper les fils électriques (501) sélectionnés pour être un nombre prédéterminé ou moins en nombre selon une règle prédéterminée à partir des informations de cheminement de câblage pour définir un faisceau de câbles ; et

un moyen pour mettre en oeuvre une étape de création d'un dessin de conception de faisceau d'une unité du faisceau de câbles défini à l'étape (S203) de définition de faisceau ; et
un moyen pour mettre en oeuvre une étape (S401, S402, S403, S404) de création et d'émission d'une figure de planche de faisceau basée sur le dessin de conception de faisceau.

6. Le système de traitement de données selon la revendication 5, comprenant en outre un moyen (101) pour mettre en oeuvre une étape (S 104) de conversion tridimensionnelle consistant à convertir des données de conception bidimensionnelles (2D) du corps en mouvement en au moins une partie des données de conception 3D.

7. Le système de traitement de données selon la revendication 5 ou la revendication 6, dans lequel les moyens (116) pour mettre en oeuvre l'étape routinière (S202) effectuent l'agencement du fil électrique (501) sur la base d'informations de câblage comprenant des informations sur une relation de connexion d'une pluralité de dispositifs agencés sur le corps mobile et le fil électrique (501).

8. Le système de traitement de données selon la revendication 7, comprenant en outre un moyen (106) pour mettre en oeuvre une étape de conversion de câblage (S 107) consistant à convertir des informations de circuit électrique indiquant une connexion électrique parmi la pluralité de dispositifs à au moins une partie des informations de câblage.

9. Le système de traitement de données selon la revendication 7 ou la revendication 8,

dans lequel les informations de cheminement de câblage comprennent des informations d'affichage de longueur supplémentaire pour afficher une longueur supplémentaire dans un format défini à l'avance, et
les informations de câblage comprennent une valeur de longueur supplémentaire, qui est une valeur d'une longueur de la longueur supplémentaire fournie à au moins une parmi une extrémité ou une autre extrémité du fil électrique (501).

10. Le système informatique selon l'une quelconque des revendications 7 à 9, dans lequel les informations de câblage comprennent des informations de position de passage, qui sont une position tridimensionnelle, selon laquelle le fil électrique (501) passe, et
les informations de position de passage comprennent des informations de limite définissant une forme du fil électrique (501) passant la position.

FIG. 1

FIG. 2

601

FIG. 3

FIG. 4

200

201

202   202   202   202   202   202

CONTROL COMPUTER — 211

INPUT/OUTPUT
SECTION — 212

CONTROL
SECTION — 213

DATA SERVER — 221

STORAGE
SECTION — 222

FIG. 5

START

CREATE VIRTUAL SPACE — S100

ELECTRICAL WIRE ROUTING WORK — S200

CREATE HARNESS DESIGN DRAWING — S300

CREATE HARNESS BOARD FIGURE — S400

END

FIG. 6

\<CREATE VIRTUAL SPACE\>

```
                    ┌─────────────┐
                    │    START    │
                    └─────────────┘
                           │
                           ▼
            ┌──────────────────────────────┐
            │    ACQUIRE THREE-            │
            │   DIMENSIONAL CAD DATA       │── S101
            │  AND WIRING INFORMATION      │
            └──────────────────────────────┘
                           │
                           ▼         S102
                    ╱──────────────╲          YES
                   ╱ MODEL CREATION ╲ ─────────────────┐
                   ╲   POSSIBLE?    ╱                   │
                    ╲──────────────╱                    │
                           │ NO                         │
                           ▼                            │
            ┌──────────────────────────────┐           │
            │  ACQUIRE TWO-DIMENSIONAL      │── S103    │
            │         CAD DATA             │           │
            └──────────────────────────────┘           │
                           │                            │
                           ▼                            │
            ┌──────────────────────────────┐           │
            │ CONVERT TWO-DIMENSIONAL       │           │
            │   CAD DATA TO THREE-          │── S104    │
            │  DIMENSIONAL CAD DATA         │           │
            └──────────────────────────────┘           │
                           │                            │
                           ▼◄───────────────────────────┘
                                      S105
                    ╱──────────────╲          NO
                   ╱ WIRING INFORMATION╲ ─────────────────┐
                   ╲   LACKING?      ╱                     │
                    ╲──────────────╱                       │
                           │ YES                           │
                           ▼                               │
            ┌──────────────────────────────┐              │
            │   ACQUIRE ELECTRICAL          │── S106       │
            │   CIRCUIT INFORMATION         │              │
            └──────────────────────────────┘              │
                           │                               │
                           ▼                               │
            ┌──────────────────────────────┐              │
            │   CONVERT ELECTRICAL          │              │
            │ CIRCUIT INFORMATION TO        │── S107       │
            │   WIRING INFORMATION          │              │
            └──────────────────────────────┘              │
                           │                               │
                           ▼◄──────────────────────────────┘
            ┌──────────────────────────────┐
            │   CREATE VIRTUAL SPACE        │── S108
            └──────────────────────────────┘
                           │
                           ▼
                    ┌─────────────┐
                    │   RETURN    │
                    └─────────────┘
```

FIG. 7

<ELECTRICAL WIRE ROUTING WORK>

START

ARRANGE VIRTUAL SPACE — S201

ROUTING WORK — S202

CREATE WIRE HARNESS
INFORMATION AND BINDING — S203
MEMBER INFORMATION

CREATE HARNESS WIRING — S204
DIAGRAM INFORMATION

RETURN

FIG. 8

201

EXTRA LENGTH: 1000mm

501

505

502

FIG. 9

FIG. 10A

PASSING POINT

501

501

Z

Y

X

FIG. 10B

PASSING POINT

501

501

Z

Y

X

FIG. 11

<CREATE HARNESS DESIGN DRAWING>

FIG. 12

<CREATE HARNESS BOARD FIGURE>

FIG. 13

**EP 3 477 513 B1**

### Patent documents cited in the description

- JP 2010137649 A
- WO 2017149651 A1